# EUROPEAN PATENT SPECIFICATION

(11) **EP 3 472 297 B1**
(45) Date of publication and mention of the grant of the patent: **06.12.2023**
(21) Application number: 16905780.9
(22) Date of filing: 21.06.2016
(51) Int. Cl.: C11D 17/00, C11D 17/06

(54) **AESTHETIC PARTICLES**
ÄSTHETISCHE PARTIKEL
PARTICULES ESTHÉTIQUES

(43) Date of publication of application: 24.04.2019
(73) Proprietor: The Procter & Gamble Company, Cincinnati, OH 45202 (US)
(72) Inventor: SCHAMP, Koen Mariette Albert, Beijing 101312 (CN); ZHAO, Pu, Beijing 101312 (CN)
(74) Representative: P&G Patent Belgium UK
(86) International application number: PCT/CN2016/086557
(87) International publication number: WO 2017/219238

(56) References cited:
- EP-A1- 1 405 571
- EP-A1- 2 821 469
- WO-A1-2009/047125
- WO-A1-2018/059912
- WO-A1-2018/226217
- US-A1- 2006 003 055
- US-A1- 2016 101 026

## Description

### FIELD OF THE INVENTION

The present invention is directed to a cleaning, personal care or fabric treatment composition containing a plurality of three dimensionally printed aesthetic particles that are water dispersible.

### BACKGROUND OF THE INVENTION

Distinct aesthetic particles that are water dispersible have been generally used in cleaning compositions. These particles provide a visual cue to users connoting aesthetic or even functional benefits. For example, liquid or gel surfactant compositions containing a plurality of sheet-like elements as visual cues have been described. Granular detergent compositions comprising a plurality of film particles have been described. See, for example, WO 2010/119065 and WO 2009/047128. A process for making soap pellets which have a "doughnut" shape and can float upon the surface of water has been described in US2343829A. EP2821469 A1 describes liquid cleaning and/or cleansing compositions comprising distinct abrasive particles. Pasta shapes with multiple voids are known from EP1405571 A1.

Previously described aesthetic particles are generally made by stamping or extruding techniques. This limits the design choices of the particles to rather simple ones. These simplistic designs may also limit the dissolution rate of the particles in water when these particles are incorporated into cleaning compositions. There is a need to provide water dispersible distinct aesthetic particles that have more complex designs to provide a broader range of design capabilities while improving the dissolution rate.

### SUMMARY OF THE INVENTION

The present invention is based on the surprising discovery that aesthetic particles having more complex designs made of water dispersible materials are possible with three dimensional (3D) printing. These complex designs generally increase the surface area which allows for a greater dissolution rate in water (given the increased contact with water media). One way to describe this increased design complexity is by the number of voids present in a particle, including through holes. Another way to describe this design complexity is the relatively small width of walls between voids. These aspects are possible by utilizing 3D printing (which otherwise are not practical from classic stamping or extruding techniques).

One advantage of the present invention is the minimization of waste that can result from using traditional processes such as stamping or extruding (and then cutting) such particles. Indeed stamping a plurality of through holes typically results in "punch outs" or "cut-outs" that need recycling. Extrusion also typically does not even allow for multiple through holes.

Another advantage is internal design complexity that is available for particles. For example, besides a linear through hole, a through hole which is non-linear can be provided. In yet another example, opposing ends of the non-linear through hole are not visually observable through the particle as seen from the front or back view. Such non-linear through holes can be curved, twisted, zigzagged, etc. while extending in the particle between first and second sides of the particle. Such through holes are beyond the capability of traditional processes, but are enabled by 3D printing.

The distinct aesthetic particle, has a first side and a second side, wherein the first side has a length from 0.2 mm to 20 mm; and wherein the particle comprises at least two voids, wherein the at least two voids are each a through hole extending between the first side and the second side, wherein the first side comprises a first perimeter shape, wherein the first perimeter shape has symmetry. Preferably, the first perimeter shape has mirror symmetry or radial symmetry or both. Preferably, the particle is water dispersible, more preferably the particle is water soluble. Preferably, the first perimeter shape is selected from the group consisting of regular or irregular polygons, circle, oval, petal, heart, letter, number, and combinations thereof. Preferably the second side has a second perimeter shape, and more preferably the second perimeter shape has mirror symmetry or radial symmetry or both. Preferably the first perimeter shape is substantially the same as the second perimeter shape. Preferably, the length of the first side is from 1 mm to 10 mm, preferably from 2 mm to 8 mm, more preferably from 2.5 mm to 6 mm. Preferably, the particle comprises at least three voids, preferably at least four voids, more preferably at least five voids. Preferably the first side and the second side of the particle are opposing each other, and the particle has a thickness defined by the distance between the first side and the second side ranging from 0.1 mm to 10 mm, preferably from 0.2 mm to 5 mm, more preferably from 0.2 mm to 2.5 mm. Preferably, the first side has a first planar surface and the second side has a second planar surface, and the first planar surface and the second planar surface are parallel to each other.

The present invention provides a cleaning, personal care or fabric treatment composition containing a plurality of distinct aesthetic particles, wherein the particle has a first side and an second side, wherein the first side has a length from 0.2 mm to 20 mm; and wherein the particle comprises at least two voids, wherein the at least two voids are each a through hole extending between the first side and the second side, wherein the particle is water dispersible, preferably water soluble.

The distinct aesthetic particle, comprises a first side, an opposing second side, at least one wall separating a first void and a second void contained between the first side and the second side, wherein the first side has a length from 0.2 mm to 20 mm; wherein the wall has a width ranging from 0.01 mm to 5 mm as measured in a cross sectional plane orthogonal to the wall, wherein the first side has a first perimeter shape and the first perimeter shape is symmetric, and wherein the particle is water dispersible. Preferably the particle has a thickness defined by the distance between the first side and the second side ranging from 0.1 mm to 10 mm, preferably from 0.2 mm to 5 mm, more preferably from 0.2 mm to 2.5 mm. Preferably, the first side comprises a first planar surface, the second side comprises a second planar surface, and the first planar surface and the second planar surface are parallel to each other. Preferably, the length of the first side is from 1 mm to 10 mm, preferably from 2 mm to 8 mm, more preferably from 2.5 mm to 6 mm. Preferably, at least either the first void or the second void is a through hole extending between the first side and the second side, preferably the first void and the second void are each a through hole. Preferably, the at least one wall has a width ranging from 0.05 mm to 2 mm, more preferably from 0.1 mm to 1 mm, as measured in the cross sectional plane. Preferably, the through hole has a length of 0.1 mm to 9.8 mm as measured in a cross sectional plane, preferably the length of the through hole is 0.5 mm to 8 mm, more preferably from 1 mm to 6 mm; preferably the cross sectional plane is parallel to the first planar surface. Preferably, the particle comprises at least three voids and at least two walls separating each of the at least three voids.

Yet another aspect of the invention provides a cleaning composition which comprises 0.001 wt% to 10 wt%, preferably 0.01 wt% to 8 wt%, more preferably 0.1 wt% to 5 wt% of the distinct aesthetic particles described herein. Preferably the cleaning composition comprises a surfactant. One example of a cleaning composition is a granular laundry detergent composition.

There is also disclosed a process for making a distinct aesthetic particle which is water dispersible, wherein the particle has a first side and an opposing second side, wherein the first side has a length from 0.2 mm to 20 mm; comprising the step of three dimensional (3D) printing the particle with a water dispersible material. Preferably, a water dispersible material is 3D printed to print the particle, and optionally the printed particle is cut orthogonal to a radial axis, to make the distinct aesthetic particle. Preferably, the particle comprises at least two voids, wherein the at least two voids are each a through hole extending between the first side and the second side. Preferably, the particle comprises at least one wall separating a first void and a second void contained between the first and second sides, wherein the wall has a width from 0.01 mm to 5 mm as measured in the cross sectional plane.

These and other aspects of the present invention will become more apparent upon reading the following detailed description of the invention.

### BRIEF DESCRIPTION OF THE DRAWINGS

The embodiments set forth in the drawings are illustrative in nature and not intended to limit the invention defined by the claims. The following detailed description of the illustrative embodiments can be understood when read in conjunction with the following drawings, and in which:
Fig. 1 is a perspective view of a schematic representation of a distinct aesthetic particle of the present invention.
Fig. 2 is a cross sectional front view of Fig. 1.
Fig. 3 is a front view of an optical scanning image of an exemplified distinct aesthetic particle of the present invention.
Fig. 4A is a front view of an optical scanning image of a first comparative annulus particle.
Fig. 4B is a cross sectional front view of schematic representation of the particle shown in Fig. 4A.
Fig. 5A is a front view of an optical scanning image of a second comparative solid particle.
Fig. 5B is a cross sectional front view of schematic representation of the particle shown in Fig. 5A.

### DETAILED DESCRIPTION OF THE INVENTION

Features and benefits of the various embodiments of the present invention will become apparent from the following description, which includes examples of specific embodiments intended to give a broad representation of the invention.

As used herein, the articles including "the", "a" and "an" when used in a claim or in the specification, are understood to mean one or more of what is claimed or described.

As used herein, the term "plurality" means more than one.

As used herein, the terms "comprise", "comprising", "include", "including", are meant to be non-limiting, i.e., other steps and other ingredients which do not affect the end of result can be added. Accordingly, the terms "consisting essentially of" and "consisting of" are embodied in the term "comprising". As used herein, "consisting essentially of" means that the devices, apparatuses, methods, components, and/or compositions may include additional ingredients, but only if the additional ingredients do not materially alter the basic and novel characteristics of the claimed devices, apparatuses, methods, components, and/or compositions.

As used herein, the term "essentially free of" means that the indicated material is not deliberately added to the composition, or preferably not present at analytically detectable levels. It is meant to include compositions whereby the indicated material is present only as an impurity of one of the other materials deliberately added.

By "substantially the same" used herein in the context of dimensions of particle, it means that the variation between the two values of dimension is within 5%, preferably within 3%, more preferably within 1%. By "substantially the same" used herein in the context of shapes of two sides, it means that the two shapes can be either the same, or congruent, or similar.

By "distinct" used herein in relation to the particle, it is meant that the particle is separate, i.e., not physically attached to other particles.

By "aesthetic" used herein in relation to the particle, it is meant that the particle has a designed or pre-determined, non-random size, shapes, and/or pattern to provide the consumer a visual appeal.

In this description, all concentrations and ratios are on a weight basis unless otherwise specified.

### Dimensions

The distinct aesthetic particle used in the compositions of the present invention comprises a first side and a second side. Preferably, the first side is planar, more preferably the second side is also planar. Alternatively, the first side or the second side can each independently be either convex or concave, or other forms of surface topology. In some embodiments, the first side and the second side of the present particle are opposing each other. Preferably, the first side contains a first planar surface, and the second side contains a second planar surface, and preferably the first planar surface is parallel to the second planar surface.

The first side of the particle has a length from 0.2 mm to 20 mm. Preferably, the length of the first side is from 1 mm to 10 mm. More preferably, the length of the first side is from 2 mm to 8 mm, still more preferably from 2.5 mm to 6 mm. "Length" of a side herein means the longest linear distance between any two points of the side.

The second side may have the same length as the first side. Alternatively, the second side may have a length different from the length of the first side. The second side may have a length from 0.2 mm to 20 mm, preferably from 1 mm to 10 mm, more preferably from 2 mm to 8 mm, and most preferably from 2.5 mm to 6 mm.

A thickness of the particle is defined as the distance between the first side and the second side. The thickness range of the particle may be from 0.1 mm to 10 mm, preferably from 0.2 mm to 5 mm, more preferably from 0.2 mm to 2.5 mm. For example, the thickness of the particle may be 0.3 mm, 0.4 mm, 0.5 mm, 0.6 mm, 0.7 mm, 0.8 mm, 0.9 mm, 1.0 mm, 1.2 mm, 1.5 mm, 1.8 mm, 2 mm, 2.2 mm, or 2.5 mm. In some embodiments, the particle has a midpoint thickness defined as the distance between the mid-point of the length of the first side to the mid-point of the length of the second side. The mid-point thickness of the particle may be from 0.1 mm to 10 mm, preferably from 0.2 mm to 5 mm, more preferably from 0.2 mm to 2.5 mm. In an example where the first side and the second side are in planes parallel to each other, the thickness of the particle is equal to the mid-point thickness. In preferred embodiments, the thickness of the particle is less than the length of the first side of the particle.

### Shape

The particle used in the compositions of the present invention may have a pre-determined, non-random, desirable shape on the first side and/or the second side. The side(s) may have a shape defined by its periphery, i.e., a perimeter shape. In some embodiments, the first side comprises a first perimeter shape, wherein the first perimeter shape has symmetry. Herein the symmetry has the general meaning in geometry. Preferably, the symmetry may include mirror symmetry and/or radial symmetry. In other embodiments, the second side has a second perimeter shape wherein the second perimeter shape has symmetry. In other embodiments, the first perimeter shape is substantially the same as the second perimeter shape. In some examples, the side(s) may have a perimeter shape selected from the group consisting of a circle, an oval, a heart, a regular or irregular polygon, a pedal, a letter, a number, and combinations thereof. For example, the side(s) may have perimeter shape in the form of a regular polygon shape, such as triangle, square, rectangle, quadrilateral, star, pentagon, hexagon, heptagon, and octagon. In another example, the particle has a first side having a perimeter shape of a heart.

### Side Area

The first side of the particle may have a first side area from 0.04 mm² to 400 mm², preferably from 1 mm² to 100 mm², more preferably from 4 mm² to 64 mm², still more preferably from 6.25 mm² to 36 mm².

The second side of the particle has a second side area. The second side area may be the same as or different from the first side area. Preferably the first side area and the second side area are the same. The second side of the particle may have a second side area from 0.04 mm² to 400 mm², preferably from 1 mm² to 100 mm², more preferably from 4 mm² to 64 mm², still more preferably from 6.25 mm² to 36 mm².

### Voids and Through Holes

The particle used in the compositions of the present invention comprises at least two voids, preferably the at least two voids are between the first side and the second side. Preferably the at least two voids are each a through hole extending between the first side and the second side. Herein the "through hole" means a hole completely through the material of the particle extending between the first side and the second side.

Preferably, the at least two voids are separated by a wall having a width from 0.01 mm to 5 mm as measured in a cross sectional plane.

The through hole may have a regular shape or an irregular shape. The through hole may extend between the first and second sides along a linear axis, i.e., a linear through hole. Alternatively, the through hole may be a non-linear through hole, such as a sinusoidal, or a spiral, or zigzagged, or curved, or combination thereof. The through hole may taper toward one side (vs. the other) or may taper toward a mid-point.

The particle used in the compositions of the present invention may comprise a plurality of voids. In one embodiment, the plurality of voids may be at least three voids, preferably at least four voids, more preferably at least five voids, alternatively from 3 to 50 voids, alternatively from 5 to 30 voids. In an example, the particle comprises 4, 5, 6, 7, 8, 9 or more voids, preferably wherein any two or more of these voids are through holes extending between the first side and the second side. In another example, the plurality of voids is each a through hole. In still another example, the plurality of voids comprises one or more voids that are partially enveloped by the material of the particle. In still another example, the plurality of voids comprises one or more voids that are completely enveloped (i.e. fully enclosed by the material of the particle). One advantage of such fully enveloped voids is to provide buoyancy or flotation properties to the particle (before dissolving). This can enhance the visual experience of consumer using compositions containing such particles.

### Length of Through Holes

The length of the through hole is the longest linear distance of a through hole on a cross sectional plane. In an embodiment, at least the first through hole has a length of from 0.02 mm to 18 mm. Preferably, the length of at least the first through hole is from 0.1 mm to 8 mm, more preferably from 1 mm to 5 mm. Preferably the first side has a first planar surface wherein the cross sectional plane is parallel to the first planar surface.

The through hole may have a planar area in the cross sectional plane from 0.03 mm² to 300 mm², preferably from 0.15 mm² to 100 mm², more preferably from 1 mm² to 50 mm², preferably wherein the cross sectional plane is parallel to the first planar surface of the first side.

### Voids Area Percentage

A cross sectional plane of the particle has a total cross sectional area, wherein the voids occupy from 10% to 90%, preferably 15% to 75%, more preferably 20% to 60%, of the total cross sectional area; preferably the first side has a first planar surface wherein the cross sectional plane is parallel to the first planar surface, more preferably the total cross sectional area of a cross sectional plane is equal to the first side area of the first side of the particle.

### Mass

The particle used in the compositions of the present invention may have a mass of from 0.1 mg to 5000 mg. In some embodiments, the particle may have a mass of no less than 0.5 mg, preferably no less than 1 mg, preferably no less than 2 mg. For example, the particle may have a mass of no less than 3 mg, no less than 5 mg, no less than 8 mg, or no less than 10 mg. In a preferred example, the particle has a mass of from 2 mg to 50 mg. In other embodiments, the particle may have a mass of no more than 2000 mg, for example, no more than 1000 mg, no more than 500 mg. In another example, the particle has a mass of from 100 mg to 500 mg. Preferably, the particle has a mass at least 10 wt% less than the mass of a comparable particle having same size but no voids, more preferably at least 20 wt% less than the mass of a comparable particle having same size but no voids, still more preferably at least 30 wt% less than the mass of a comparable particle having the same size but no voids.

### Total Particle Size, Overall Material Volume and Total Void Volume

The particle used in the compositions of the present invention may have a Total Particle Size from 0.1 mm³ to 4000 mm³, preferably from 0.2 mm³ to 500 mm³, more preferably from 0.8 mm³ to 160 mm³. Herein "Total Particle Size" means the total spatial size occupied by a particle.

Preferably, the particle used in the compositions of the present invention has a Total Void Volume from 0.05 mm³ to 3800 mm³. Herein "Total Void Volume" means the total volume attributable to all the voids contained in the particle. In some embodiments, two voids of the particle (of any of the plurality of voids) have a combined void volume from 0.05 mm³ to 3000 mm³, preferably from 0.1 mm³ to 450 mm³, more preferably from 0.5 mm³ to 140 mm³. In other embodiments, three voids of the particle (of any of the plurality of voids) have a combined void volume from 0.06 mm³ to 3200 mm³. In yet other embodiments, four voids of the particle (of any of the plurality of voids) have a combined void volume from 0.07 mm³ to 3500 mm³.

Preferably, the particle used in the compositions of the present invention has an Overall Material Volume from 0.02 mm³ to 3600 mm³, preferably from 0.05 mm³ to 250 mm³, more preferably 0.12 mm³ to 64 mm³. Herein "Overall Material Volume" means the volume of the material of which the particle is comprised. In other words, the Overall Material Volume is result of subtracting the Total Void Volume from the Total Particle Size.

Preferably, the particle used in the compositions of the present invention has a Total Void Volume Percentage, relative to the Total Particle Size, of from 10 volume percentage ("vol%") to 90 vol%, preferably from 15 vol% to 75 vol%, more preferably from 20 vol% to 60 vol%. The "Total Void Volume Percentage" means the percentage of a total void volume attributable to all the voids contained in the particle.

In a preferred embodiment, the voids are through holes, and accordingly the above values (including preferable ranges) are for voids that are through holes. For example, the particle may have a Total Void Volume, attributable to the totality of through holes of the particle, from 0.05 mm³ to 3800 mm³. In some embodiment, the at least two voids of the particle are each a through hole and have a combined void volume from 0.1 mm³ to 450 mm³, more preferably from 0.5 mm³ to 140 mm³. The particle may have a Total Void Volume Percentage, attributable to the totality of through holes of the particle relative to the Total Particle Size, of from 10 vol% to 90 vol%, preferably from 15 vol% to 75 vol%, more preferably from 20 vol% to 60 vol%.

### Walls

The particle used in the compositions of the present invention may have a first wall separating the at least two voids. The first wall may have a width range from 0.05 mm to 5 mm, as measured in a cross sectional plane of the particle. In a preferred embodiment, the width range of the first wall may be from 0.1 mm to 4 mm, more preferably from 0.1 mm to 2.5 mm, where still preferably the cross sectional plane is parallel to the first planar surface of the first side. Herein the "width" means the thickness of the wall defined along a cross sectional plane, preferably the cross sectional plane is parallel to the first planar surface of the first side of the particle.

In one embodiment, the particle may comprise at least three voids and at least two walls separating the at least three voids. For example, a first wall separates a first void and a second void, and a second wall separates the second void and a third void. Preferably, the second wall has a width range of from 0.05 mm to 5 mm, preferably from 0.1 mm to 4 mm, more preferably from 0.1 mm to 2.5 mm, as measured in a cross sectional plane. In another embodiment, the particle may comprise at least four voids and at least three walls separating the at least four voids. In yet another embodiment, the particle may comprise at least five voids and at least four walls separating the at least five voids. In other embodiments, the particle may comprise a plurality of voids (e.g., 6, 7, 8, 9, 10, 11, 12, 13, 14, 15 or more voids) and a plurality of walls which separate the plurality of voids. In still another embodiment, these voids may comprise one, two, three, or more through holes. In yet still other embodiments, the particle may comprise at least four voids, wherein each of the least four voids are through holes extending between the first side and the second of the particle, wherein at least three walls are each separating the through holes; and each of the walls independently have a width from 0.05 mm to 5 mm, preferably from 0.1 mm to 4 mm, more preferably from 0.1 mm to 2.5 mm, measured in the cross sectional plane, preferably wherein the cross sectional plane is parallel to the first planar surface of the first side of the particle.

Preferably, the particle has a ratio between the width of any one wall to the length of the first side ranging from 1:2 to 1:1000, preferably from 1:5 to 1:200, more preferably from 1:10 to 1:100.

### Patterns

The particle used in the compositions of the present invention may comprise desirable pre-determined pattern in a cross sectional plane defined by at least one wall which separates the at least two voids, optionally together with the outer periphery of the particle. Patterns can be a symmetrical shape or an asymmetrical shape. Preferably the pattern is a text or a geometrical graphic. In one embodiment, the particle comprises a plurality of walls separating a plurality of voids, such that the arrangement of walls and voids forms text or geometrical graphic as viewed in a cross sectional plane, preferably wherein the cross sectional plane is parallel to the first planar surface of the first side of the particle. For example, the text can write out a trademark (e.g., TIDE^{®}) or a benefit that the product provides (e.g. "Clean"). For example, the graphic may be a trademark design or geometrical design.

### Measurement

The dimensions of the particle, walls, and voids (e.g., length, thickness, width, volume, area) may be determined by those techniques well known in the art. Such techniques include calibre measurement, light microscopy, optical scanning, Scanning Electron Microscopy (SEM), X-ray micro-computed tomography (simply referred to "microCT"), relevant analysis software thereof, and combinations thereof.

Briefly, the outer dimensions such as thickness of the particle can be measured directly using a caliber. An optical scanner, together with image analysis software, can be used to measure and calculate other dimensions such as the length of the sides, the length of the through holes, the width of walls, Total Particle Size, Total Voids Volume and Overall Material Volume. An example of optical scanner is Epson Perfection V600 Photo Scanner commercially available from Epson Singapore Pte Ltd., Singapore. An example of computer software program is image analysis software MATLAB R2015b (the MathWorks Inc., Natick, Massachusetts, U.S.A.)

SEM and microCT instruments can also be used to measure and calculate dimensions of the particle with aid of a computer and relevant software. An example of microCT instrument is SCANCO model µ40 microCT instrument commercially available from Scanco Medical AG (Brüttisellen, Switzerland). Software programs suitable for thresholding, image processing steps and quantitative image analysis for MicroCT may include computer software programs such as AVIZO (Visualization Services Group / FEI Company, Burlington, Massachusetts, U.S.A.), and MATLAB version R2016 (The Mathworks Inc., Natick, Massachusetts, U.S.A.).

### Water Dispersible Particle

The particle used in the compositions of the present invention is water dispersible. Herein "water dispersible" used in relation to a material or a particle means that a material or particle is capable of being dispersed in an aqueous solvent (e.g. water) to form a stable mixture (homogeneous or heterogeneous) at ambient conditions. It may form a solution, an emulsion, or a suspension. Preferably, the material or particle does not precipitate or separate from water for greater than 5 minutes after forming the stable mixture. In its broadest context, a water dispersible material may include both water soluble and insoluble materials.

Preferably, "water-soluble" material as used herein means a material that is miscible in water. Preferably the material that is capable of forming a stable homogeneous solution with water at ambient conditions.

### Water-soluble Matrix Agent

The particle used in the compositions of the present invention may comprise water-soluble matrix agent. Matrix agent means a filler or carrier in the particle. In an embodiment, the particle may consist essentially of the water-soluble matrix agent. In other embodiments, the particle may comprise from 1% to 99% of the water-soluble matrix agent by the total weight of the particle. Preferably, the water-soluble matrix agent may be comprised in the particle at a level not less than 10%, preferably not less than 40%, more preferably not less than 50% by weight of the particle. Preferably, the water-soluble matrix agent may be comprised in the particle at a level not more than 99%, preferably not more than 95%, more preferably not more than 90% by weight of the particle.

The water-soluble matrix agent used herein may be selected from the group consisting of water-soluble hydroxyl polymers, water-soluble thermoplastic polymers, water-soluble biodegradable polymers, water-soluble non-biodegradable polymers, bio-derived polymers, and combinations thereof.

Suitable water-soluble hydroxyl polymers useful herein may include polyols, such as polyvinyl alcohol, polyvinyl alcohol derivatives, polyvinyl alcohol copolymers, starch, starch derivatives, starch copolymers, chitosan, chitosan derivatives, chitosan copolymers, cellulose derivatives such as cellulose ether and ester derivatives, cellulose copolymers, hemicellulose, hemicellulose derivatives, hemicellulose copolymers, gums, arabinans, galactans, proteins, and various other polysaccharides and combinations thereof.

In an example, a water-soluble hydroxyl polymer may comprise a non-thermoplastic polymer.

In one example, the water-soluble hydroxyl polymer may be selected from the group consisting of: polyvinyl alcohols, hydroxymethylcelluloses, hydroxyethylcelluloses, hydroxypropylmethylcelluloses and combinations thereof. A non-limiting example of a suitable polyvinyl alcohol includes those commercially available from Sekisui Specialty Chemicals America, LLC (Dallas, TX) under the CELVOL^{®} trade name. A non-limiting example of a suitable hydroxypropylmethylcellulose includes those commercially available from the Dow Chemical Company (Midland, MI) under the METHOCEL^{®} trade name including combinations with above mentioned hydroxypropylmethylcelluloses.

Polyvinyl alcohols herein can be grafted with other monomers to modify its properties. A wide range of monomers has been successfully grafted to polyvinyl alcohol. Non-limiting examples of such monomers include vinyl acetate, styrene, acrylamide, acrylic acid, 2-hydroxyethyl methacrylate, acrylonitrile, 1,3-butadiene, methyl methacrylate, methacrylic acid, maleic acid, itaconic acid, sodium vinyl sulfonate, sodium allylsulfonate, sodium methylallyl sulfonate, sodium phenyl allyl ether sulfonate, sodium phenylmethallylether sulfonate, 2-acrylamido-methyl propane sulfonic acid (AMPs), vinylidene chloride, vinyl chloride, vinyl amine and a variety of acrylate esters.

Suitable water-soluble thermoplastic polymers useful herein may include thermoplastic starch and/or starch derivatives, polylactic acid, polyhydroxyalkanoate, polycaprolactone, polyesteramides and certain polyesters, and combinations thereof.

The water-soluble thermoplastic polymers may be hydrophilic or hydrophobic. The water-soluble thermoplastic polymers may be surface treated and/or internally treated to change the inherent hydrophilic or hydrophobic properties of the thermoplastic polymer.

The water-soluble thermoplastic polymers may comprise biodegradable polymers.

In an embodiment of the present invention, the water-soluble matrix agent may comprise a polymer selected from the group consisting of: polymers derived from acrylic monomers such as the ethylenically unsaturated carboxylic monomers and ethylenically unsaturated monomers, polyvinyl alcohol, polyacrylates, polymethacrylates, copolymers of acrylic acid and methyl acrylate, polyvinylpyrrolidones, polyalkylene oxides, starch and starch derivatives, pullulan, gelatin, hydroxypropylmethyl cellulose, methycelluloses, and carboxymethycelluloses.

In another embodiment, the water-soluble matrix agent may comprise a polymer selected from the group consisting of: polyvinyl alcohol, polyvinyl alcohol derivatives, polyvinyl alcohol copolymers, starch, starch derivatives, polylactic acid, polyhydroxyalkanoate, polycaprolactone, polyesteramides and certain polyesters, cellulose derivatives, hemicellulose, hemicellulose derivatives, proteins, sodium alginate, hydroxypropyl methylcellulose, chitosan, chitosan derivatives, polyethylene glycol, tetramethylene ether glycol, polyvinyl pyrrolidone, hydroxymethyl cellulose, hydroxyethyl cellulose, and combinations thereof.

In still another embodiment, the water-soluble matrix agent may comprise a polymer selected from the group consisting of: pullulan, hydroxypropyl cellulose, carboxymethyl cellulose, xanthan gum, tragacanth gum, guar gum, acacia gum, Arabic gum, polyacrylic acid, methylmethacrylate copolymer, carboxyvinyl polymer, dextrin, pectin, chitin, levan, elsinan, collagen, gelatin, zein, gluten, soy protein, casein, hemicellulose, hemicellulose derivatives, proteins, chitosan, chitosan derivatives, polyethylene glycol, tetramethylene ether glycol, and combinations thereof.

### Active agents

Optionally, the particle may further comprise active agent(s). Active agents are a class of additives that are designed and intended to provide a benefit to something other than the particle itself, such as providing a benefit to an environment external to the particle. Active agents may be any suitable additive that produces an intended effect under intended use conditions of the particle. Preferably, the active agent is water dispersible.

In an embodiment, the particle may comprise from 1% to 99% of active agents by the total weight of the particle. Preferably, the active agents may be comprised in the particle at a level not less than 1%, preferably not less than 5%, more preferably not less than 10% by weight of the particle. Preferably, the active agents may be comprised in the particle at a level not more than 90%, preferably not more than 60%, more preferably not more than 50% by weight of the particle.

For example, the active agent may be selected from the group consisting of: personal cleansing and/or conditioning agents such as hair care agents such as shampoo agents and/or hair colorant agents, hair conditioning agents, skin care agents, sunscreen agents, and skin conditioning agents; laundry care and/or conditioning agents such as fabric care agents, fabric conditioning agents, fabric softening agents, fabric anti-wrinkling agents, fabric care anti-static agents, fabric care stain removal agents, soil release agents, dispersing agents, suds suppressing agents, suds boosting agents, anti-foam agents, and fabric refreshing agents; hard surface care agents, and/or conditioning agents such as liquid and/or powder dishwashing agents (for hand dishwashing and/or automatic dishwashing machine applications), and polishing agents; other cleaning and/or conditioning agents such as antimicrobial agents, perfume, bleaching agents (such as oxygen bleaching agents, hydrogen peroxide, percarbonate bleaching agents, perborate bleaching agents, chlorine bleaching agents), bleach activating agents, chelating agents, builders, lotions, brightening agents, air care agents, carpet care agents, dye transfer-inhibiting agents, water-softening agents, water-hardening agents, pH adjusting agents, enzymes, flocculating agents, effervescent agents, preservatives, cosmetic agents, make-up removal agents, lathering agents, deposition aid agents, coacervate-forming agents, clays, thickening agents, latexes, silicas, drying agents, odor control agents, antiperspirant agents, cooling agents, warming agents, absorbent gel agents, anti-inflammatory agents, dyes, pigments, acids, and bases; liquid treatment active agents; agricultural active agents; industrial active agents; ingestible active agents such as medicinal agents, teeth whitening agents, tooth care agents, mouthwash agents, periodontal gum care agents, edible agents, dietary agents, vitamins, minerals; water-treatment agents such as water clarifying and/or water disinfecting agents, and combinations thereof. Suitable examples include those described in WO2013/003351A2, which is incorporated herein by reference.

One or more classes of chemicals may be useful for one or more of the active agents listed above. For example, surfactants may be used for any number of the active agents described above. Likewise, bleaching agents may be used for fabric care, hard surface cleaning, dishwashing and even teeth whitening. Therefore, one of ordinary skill in the art will appreciate that the active agents will be selected based upon the desired intended use of the particle.

In an embodiment, the particle comprises surfactants. Suitable surfactants may include anionic, nonionic, zwitterionic/amphoteric surfactants, and combinations thereof.

Suitable anionic surfactants useful herein may include, but are not limiting to, a sulfate detersive surfactant, e.g., alkoxylated or non-alkoxylated alkyl sulfates; a sulfonic detersive surfactant, e.g., alkyl benzene sulfonates, paraffin sulfonates or secondary alkane sulfonates; and combinations thereof.

Suitable nonionic surfactants useful herein may include, but are not limiting to, linear or branched alkoxylated fatty alcohols, and combinations thereof.

Suitable cationic surfactants useful herein may include, but are not limiting to, quaternary ammonium surfactants, cationic ester surfactants, alkyl pyridinium compounds, alkyl quaternary ammonium compounds, alkyl quaternary phosphonium compounds, alkyl ternary sulphonium compounds, and combinations thereof.

Suitable zwitterionic/amphoteric surfactants useful herein may include, but are not limiting to, derivatives of secondary and tertiary amines, derivatives of heterocyclic secondary and tertiary amines, or derivatives of quaternary ammonium, quaternary phosphonium or tertiary sulfonium compounds. Examples of zwitterionic/amphoteric surfactants may be amine oxide or betaine surfactant.

In some embodiments, the particle may further comprise one or more active agents selected from enzymes, perfumes, and suds suppressors. In other embodiments, the particle of the present invention may comprise a builder and/or a chelating agent. In another embodiment, the particle of the present invention may comprise a bleaching agent.

In one embodiment, the particle may have color which provides visual contrast to the bulk of the cleaning composition. Preferably, the particle may have more than one color so that visually distinguishable patterns with different colors can be achieved. Any dye or pigment capable of imparting a visually distinguishable color can be included in the particle. Suitable colorants include food colorants, titanic dioxide, colorant dyes or pigment. Preferably, the colorant dyes or pigments are non fabric-substantive. The colorant preferably is red, green, blue, yellow, teal, cyan, brown, orange, violet, purple, or any color that includes one or more of these colorants in combination. White and off-white colorants may be added to provide a visually contrasting color to the aesthetic particles if the cleaning composition is sufficiently colored to visually contrast with such a white color. Suitable soap and detergent dyes may be obtained from Chromatech, Incorporated or Chomatech Europe, B.V. as CHROMATINT^{®} colors. In an embodiment, the particle comprises at least two colors. In another embodiment, the particle comprises a striated shape with at least two colors. In still another embodiment, the particle comprises a shape of rainbow.

Colors can be provided by dyes or pigments. Dyes include azo dyes, thiazolium dyes, anthraquinone dyes, benzofuranone dyes, polycyclic aromatic carbonyl dyes containing one or more carbonyl groups linked by a quinoid system, indigoid dyes, polymethine and related dyes, styryl dyes, di- and tri- aryl carbonium and related dyes, such as diphenylmethane, methylene blue, triphenylmethane blue and violet base dyes, oxazine and xanthene types; also useful are the phthalocyanines for instance those including di- and trusulfonated types; quinophthalones, sulphur dyes and nitro-dyes.

Highly preferred dyes include dyes having low fastness to textiles, sometime termed non-staining dyes. These have high aesthetic effect but do not discolor laundered textiles. Such dyes often comprise solubility enhancing moieties such as PEG moieties and have been described in various patent applications.

Another class of preferred dyes includes dyes having a bluing effect on textiles. These dyes are more generally termed "hueing" or "fabric hueing" dyes in the laundry detergent art.

For example, suitable pigments or dyes may include titanium dioxide, bluing agents such as copper sulfate, zinc thiosulfate and ultramarine blue.

For example, the particle may comprise a weight ratio of water-soluble matrix agent to the active agents of 1:100 to 100:1, preferably from 1:10 to 10:1, respectively.

Preferably, the particle of the present invention is essentially free of water.

### Three Dimensional (3D) Printing

Three Dimensional (3D) printing, also known as additive manufacturing (AM), refers to various processes used to synthesize a three-dimensional object.

Available 3D printing techniques include fused deposition modeling (FDM) (extrusion-based technique), ink jetting, selective laser melting (SLM), selective heat sintering (SHS), powder/binder jetting, electron-beam melting (EBM), and stereolithographic processes.

For example, fused deposition modeling (FDM) is a most common type of 3D printing, which is a classic application of plastic extrusion. In FDM process for the present invention, the aesthetic particle is produced by extruding small beads of water dispersible material which harden immediately to form layers. A filament of the water dispersible material which is wound on a coil is unreeled to supply material to an extrusion nozzle head (3D printer extruder). The nozzle head heats the material and turns the flow on and off. Typically the extrusion head is moved by stepper motors or servo motors along 3 axes of motion. A computer-aided manufacturing (CAM) software package is used to generate the G-Code that is sent to a microcontroller for moving the motors.

### Compositions

The invention provides a composition containing a plurality of the aesthetic particles described herein. Preferably the composition is a cleaning composition or a personal care composition. Preferably, at least 1 wt%, preferably at least 5 wt%, more preferably at least 10 wt%, of the distinct aesthetic particle contained in distinct aesthetic particle population in the composition as a whole, exhibits the same shape. Preferably, at least 1 wt%, preferably at least 5 wt%, more preferably at least 10 wt%, of the distinct aesthetic particle contained in distinct aesthetic particle population in the composition as a whole, has substantially the same length of the first side.

"Personal care composition" as used herein, refers to compositions intended for topical application to the skin or hair. Non-limiting examples of personal care compositions can include a shampoo, a hair conditioner, a hair treatment, a facial soap, a body wash, a body soap, a foam bath, a make-up remover, a skin care product, an acne control product, a deodorant, an antiperspirant, a shaving aid, a cosmetic, a depilatory, a fragrance, and a combination thereof.

"Cleaning composition" refers to compositions and formulations designed for cleaning soiled material or object. Non-limiting examples of cleaning composition can include laundry cleaning compositions and detergents, dish washing compositions, hard surface cleaning compositions.

Another example of a composition is a fabric treatment composition. Non-limiting examples of fabric treatment compositions include fabric softening composition, fabric enhancing compositions, fabric freshening compositions, and combinations thereof.

The composition may have a form selected from liquid, powder, single-phase or multiphase gel, paste, bar, flake, or spray.

The composition described in the present invention may further comprise one or more selected from surfactants, enzymes, perfumes, suds suppressors, builders, bleaching agents, and chelating agents.

### EXAMPLES

### Example 1: Three Dimensional Printing a Particle

3D printer instrument MakerBot Replicator 2X (MakerBot Industies. LLC, NY, USA) is used to make Inventive Example A and Comparative Examples B and C.

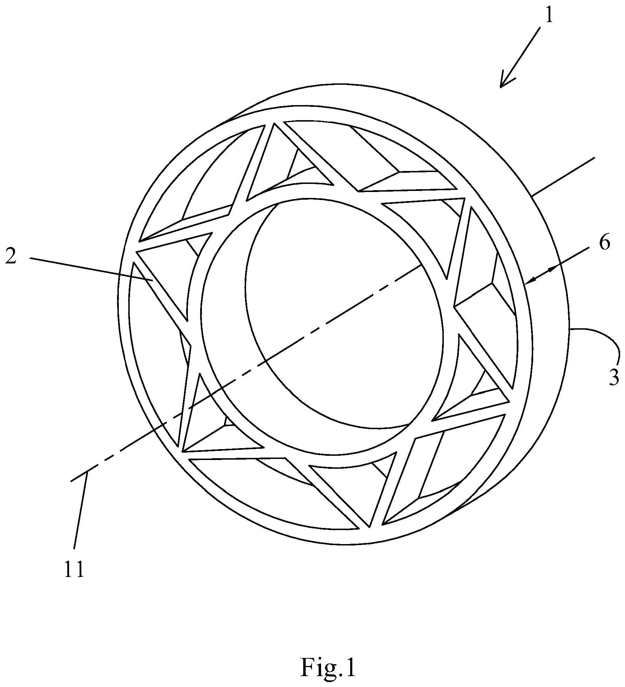

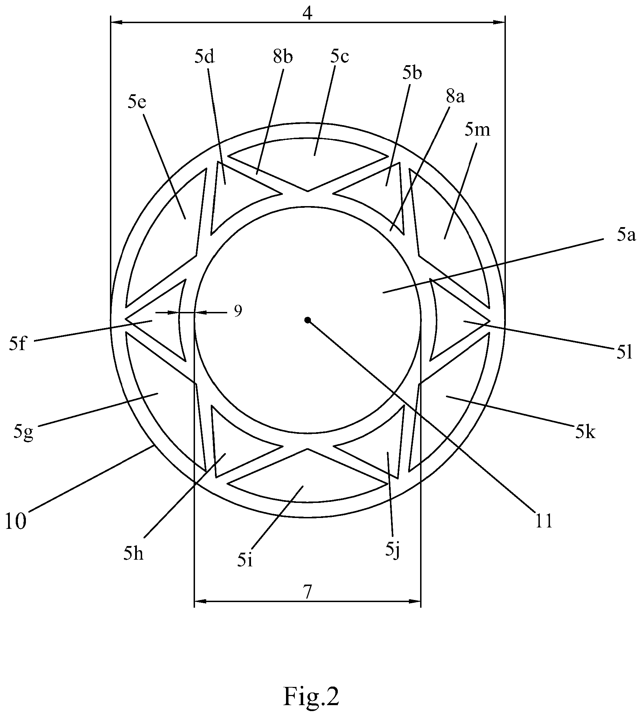

The Examples are 3D printed using a natural color polyvinyl alcohol (PVA) filament having diameter of 1.75 mm available from supplier as the water-soluble matrix agent. Inventive Example A is an inventive particle having a cross section shown in Fig. 2 with a diameter of 5 mm and a thickness of about 0.3 mm. Comparative Example B is an annulus particle with an outer diameter of 3 mm having an inner hole with a diameter of 1 mm and thickness of about 0.4 mm. Comparative Example C is a solid circular particle having a diameter of 2 mm and a thickness of about 0.7 mm. Shapes are designed using 3D model design software Autodesk 123D Design 1.6.41 and saved as a *.stl file. The shapes are then rescaled into tubes by increasing the dimension perpendicular to the circular cross section. The designed model is converted to 3D slicing software e.g. MakerBot Desktop 3.9.1.1143 and the printer parameters are as follows: layer height 0.1 mm; coarseness 0.0001 mm; 100% infill density with 0.1 mm layer height; extruder temperature 190°C; and platform temperature 60°C. The respective tubes are printed out horizontally, i.e., the nozzle head moves along the entire width direction of the target particle first (i.e., along the radial axis per Fig. 1 described below), and then in a direction orthogonal to the radial axis in a cross sectional plane. The printed tubes have a total length of about 140 mm and are cut across the length (i.e., cut across the radial axis per Fig. 1 described below) into particles with desired thickness by hand with sharp blade. The cross sectional shape, number of voids, diameter and thickness are provided for Examples A, B, and C in Table 1 below.

**Table 1: Dimensional Aspects of Examples A, B, and C.**

| | Cross Sectional Shape | No. of Voids | Diameter | Thickness |
|---|---|---|---|---|
| Inventive Example A | Fig. 2 | 13 | 5 mm (outer) | 0.30 mm |
| Comparative Example B | Annulus ring | 1 | 3 mm (outer) | 0.42 mm |
| | | | 1 mm (inner) | |
| Comparative Example C | Solid circle | 0 | 2 mm | 0.73 mm |

| | | | | |
|---|---|---|---|---|
| *this value is measured by caliber described herebelow | | | | |

### Example 2: Dimensions

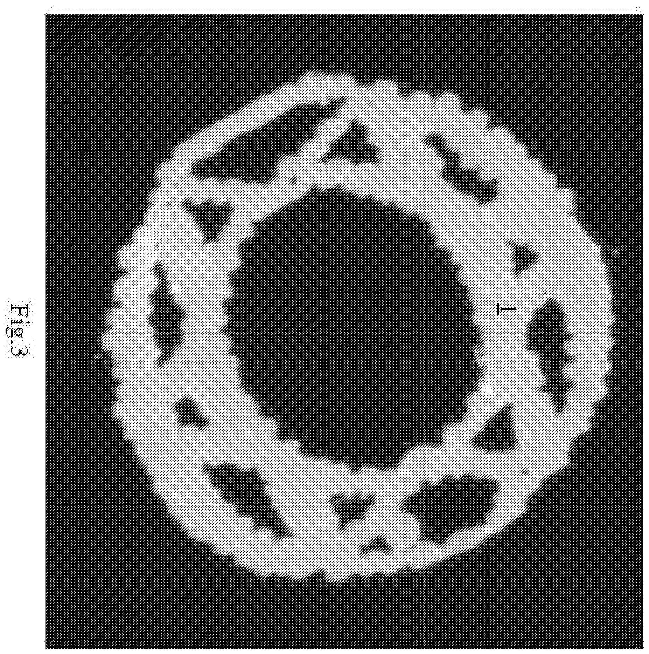

A particle of Inventive Example A is made by the method described in Example 1. Fig. 1 shows a perspective view of a schematic representation of the particle of Inventive Example A. Fig. 2 shows a cross sectional front view of Fig. 1. Fig. 3 shows an optical scanning image from a front view of the particle of Inventive Example A.

The particle (1) has a first side (2) and an opposing second side (3). The first side (2) has a first planar surface, and the second side (3) has a second planar surface. Due to the cutting method described in Example 1, the first planar surface and the second planar surface are parallel to each other, and both are orthogonal to a radial axis (11) (shown in Fig. 1). The cross sectional plane of Fig. 2 is parallel to the first planar surface and orthogonal to the radial axis (11). The perimeter (10) of the first side forms a perimeter shape in the form of a circle. Although not visible in the figures, a perimeter of the second side forms a perimeter shape also in the form a circle. The particle (1) has both radial symmetry around the radial axis (11) as well as mirror symmetry in the cross sectional plane orthogonal to the radial axis (11). The first side (2) has a length (4) and the second side (3) has a length (not shown). For the particle (1), the length (4) of the first side is the outer diameter of the perimeter shaped circle. The length (4) of the first side is the same as the length of the second side (not shown). The particle (1) comprises a plurality of voids (5) which are each through holes (5a, 5b, 5c, 5d ..., 5m) extending between the first side (2) and the second side (3). Each of the through holes is a linear through hole. The length (7) of the first through hole (5a) is the diameter of the inner perimeter shaped circle. The particle (1) comprises a thickness (6) defined by the distance between the first side (2) and the second side (3) (along the radial axis (11)). A plurality of walls (8) separates the plurality of voids (5). That is, a first wall (8a) separates a first through hole (5a) and a second through hole (5b). A second wall (8b) separates a third through hole (5c) and a fourth through hole (5d). This is repeated such that there is a wall (8) between each of the through holes (5a-5m). Each wall (8) has a width (9).

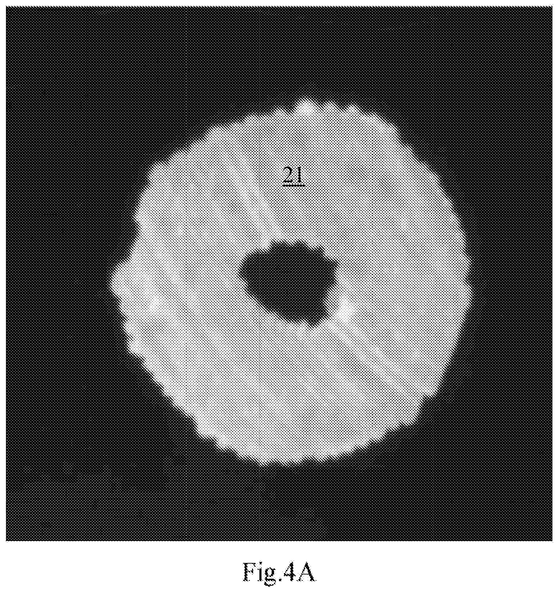

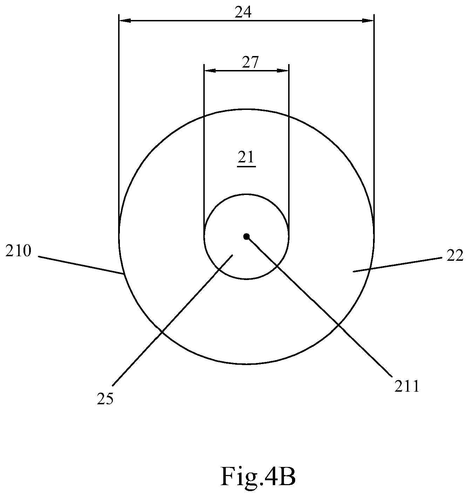

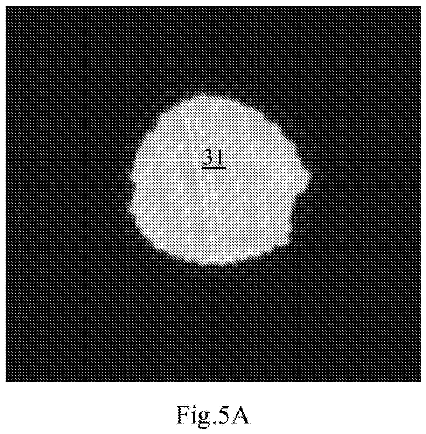

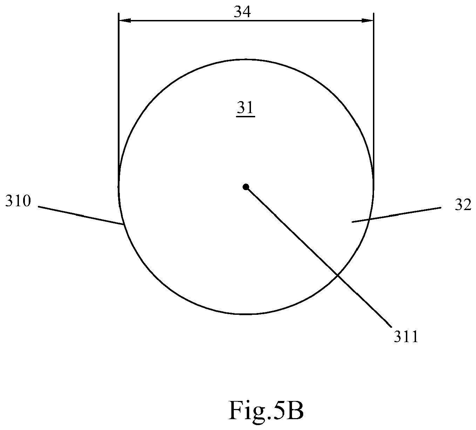

Fig. 4A is an optical scanning image from the front view for an annulus particle of Comparative Example B (21). Fig. 4B is a cross sectional front view of the schematic representation of the particle shown in Fig. 4A. Fig. 5A is an optical scanning image from the front view for another comparative solid particle of Example C (31). Fig. 5B is a cross sectional front view of the schematic representation of the particle shown in Fig. 5A.

Referring to Fig. 4B, the annulus particle (21) of Comparative Example B has a first side (22) and an opposing second side (not shown). The first side (22) has a first planar surface and the second side has a second planar surface. The first planar surface and the second planar surface are parallel to each other and are both orthogonal to a radial axis (211). The perimeter (210) of the first side (22) forms a perimeter shape in the form of a circle. Although not visible in the figure, a perimeter of the second side forms a perimeter shape also in the form a circle. The annulus particle (21) has both radial symmetry around the radial axis (211) as well as mirror symmetry in a cross sectional plane orthogonal to the radial axis (211). The first side (22) has a length (24) which is the outer diameter of the perimeter shaped circle. The second side has a length which is the same as the length (24) of the first side. The annulus particle (21) comprises one void which is a through hole (25). The through hole (25) is a linear through hole between the first side (22) and the second side. The through hole (25) forms a perimeter shaped in the form of a circle a cross sectional plane orthogonal to the radial axis (211). The through hole (25) has both radial symmetry around the radial axis (211) as well as mirror symmetry in the cross sectional plane. The perimeter circle of the through hole is concentric to the perimeter circle (210) of the first side (22). The length (27) of the through hole is the diameter of the inner perimeter shaped circle. The annulus particle (21) comprises a thickness defined by the distance between the first side (22) and the second side (along the radial axis (211)).

Referring to Fig. 5B, the solid particle (31) of Comparative Example C has a first side (32) and an opposing second side (not shown). The first side (32) has a first planar surface and the second side has a second planar surface. The first planar surface and the second planar surface are parallel to each other and are both orthogonal to a radial axis (311). The perimeter (310) of the first side (32) forms a perimeter shape in the form of a circle. Although not visible in the figure, a perimeter of the second side forms a perimeter shape also in the form a circle. The first side (32) has a length (34) which is the outer diameter of the perimeter shaped circle. The solid particle (31) also has both radial symmetry around the radial axis (311) as well as mirror symmetry in a cross sectional plane orthogonal to the radial axis (311). However, the solid particle (31) comprises no through hole. The solid particle (31) comprises a thickness defined by the distance between the first side (32) and the second side (along the radial axis (311)).

### Example 3: Dimensional Measurements

A caliber (Mitutoyo 500-197-20, commercially available from Mitutoyo Corporation, Japan) is used to measure the thickness of the particle. The measurement is made three times and then averaged. Results are shown in Table 1 above.

Further, Examples A to C are scanned using Epson Perfection V600 Photo Scanner (Epson Singapore Pte Ltd., Singapore) and analyzed by image analysis software MATLAB R2015b (the MathWorks, Inc., MA, USA) to obtain the dimensions of the particles (e.g. length, width, area and volume, etc.) Examples A to C are scanned using 12800 dpi resolution in 8 bit grey mode and saved as TIF image file. MATLAB R2015b software is used to transform the 8 bit grey image into a black and white image using adjusted threshold (150 or 160 in the test). The area of the side and voids are measured using "Image Region Analyzer" tool in MATLAB from the black and white image. The length of walls, voids, and size of the particle as a whole are measured using measurement function in "Image Viewer" toll in MATLAB from TIF image. Area and length are determined by extrapolating the number pixels (by imaging resolution) per known unit of distance. The results are shown in Table 2 below.

The Inventive Example A is also scanned by a SCANCO model µ40 microCT instrument (Scanco Medical AG, Brüttisellen, Switzerland) using the following image acquisition parameters: 45kv, 177uA, 8W, 300 ms integrati on time, 5 averages. Each reconstructed data set consisted of a stack of 2D images, each 2048 x 208 voxels, with an isotropic resolution of 6 µm. The 3D reconstructions are performed using the software accompanying the instrument.

Image Analysis of the MicroCT data comprised of the following steps:
1. The native Scanco 16bit signed data of the example is read into Avizo.
2. The data is converted to 8bit using a scaling factor of 0.05.
3. All extraneous data besides the particle is removed by creating a subvolume containing only the particle followed by use of the Avizo Volume Editor to remove the presence of the sample holder in the image.
4. Connected components for a threshold value of 60 is used to separate the plastic component from air.
5. The resulting region is dilated and multiplied by the 8bit data created in step 2. The resulting data then has the original grey levels inside the particle and 0 beyond the dilated exterior.
6. This 3D data is then processed in Matlab to determine the thickness of the sample across the face of the particle. With the sample oriented to be perpendicular the Z axis, the distance between the front and back face of the Example particle is then calculated and this distance is recorded and scaled to 8bits. The resulting thickness image is then saved in the blue channel of an RGB image.
7. The RGB image is then read into a web based program developed by Procter & Gamble called Image2Measure, which allows calibration and measurements of areas and lengths and mean grey level values of an RGB image.
8. For each hole in the particle, the cross sectional area is measured using the polygon tool in Image2Measure. Identify all the through holes in the image.
9. The largest diameter (of the particle and the first through hole) is also measured directly in Image2Measure.
10. The cross sectional area and voids area of the example is measured.
11. The width of walls is measured from all the through holes.
12. Total Particle Size is calculated as the average thickness multiplied by the cross sectional area. Total Void Volume is calculated as the average thickness multiplied by the void area in cross sectional plane.
13. The data is exported in Excel and statistics for all the geometric components are created.

The results of microCT for Inventive Example A are shown in Table 2 under the column "MicroCT Measurement".

**Table 2**

| Samples | Inventive Example A | | Comparative Example B | Comparative Example C |
|---|---|---|---|---|
| Measure method | MicroCT Measurement | Optical Scanning Measurement | Optical Scanning Measurement | Optical Scanning Measurement |
| Thickness (mm) | 0.418 | 0.30 | 0.42 | 0.73 |
| Length of first side (mm) | 4.716 | 4.601 | 2.975 | 2.005 |
| Length of first through hole (mm) | 2.646 | 2.660 | 0.6334 | N/A |
| Width range of wall (mm) | 0.115-0.649 | 0.182 - 0.494 | 0.851 - 1.120 | N/A |
| First side area (mm²) | 17.172 | 15.949 | 6.502 | 2.811 |
| Void area (mm²) | 7.524 | 6.843 | 0.414 | N/A |
| Total Particle Size (mm³) | 7.172 | 4.785 | 2.731 | 2.052 |
| Overall Material Volume (mm³) | 4.043 | 2.732 | 2.557 | N/A |
| Total Void volume (mm³) | 3.128 | 2.053 | 0.174 | N/A |
| Total Void volume percentage (vol%) | 43.62% | 42.9% | 6.37% | N/A |

| | | | | |
|---|---|---|---|---|
| *this value is the width of the annulus ring | | | | |

### Example 4: Dissolution Comparison Test

The dissolution of Inventive Examples A and Comparative Examples B and C are assessed for dissolution time in water. Three 100 mL beakers are each filled with 80 mL deionized water at about 23°C. One magnetic stirrer is added to each beaker and stirred at 400 rotations per minute (rpm). The Examples A, B, and C, each with about equal mass as described in Table 3, are each placed in a respective stirring beaker. The time is recorded by visually observing (with an unaided eye) the total time it takes for each Example to completely dissolve. Results are reported in Table 3. Inventive Example A takes the least amount of time to dissolve at 6.5 minutes as compared to comparative Example B and C which take 13 minutes and longer than 20 minutes, respectively.

**Table 3**

| | Mass (g) | Time to fully dissolve (minutes) |
|---|---|---|
| Inventive Example A | 0.0032 | 6.5 |
| Comparative Example B | 0.0031 | 13 |
| Comparative Example C | 0.0032 | >20 |

After addition to the stirring beaker, the particle of Inventive Example A is observed to break into smaller pieces after about 2.5 minutes, and completely dissolves after 6.5 minutes. The particle of Comparative Example B only completely dissolves about twice as long as inventive Example A. The particle of Comparative Example C performs worst by still being visible even after 20 minutes.

It can be clearly seen from the results that the particle used in the compositions of the present invention with desired design complexity has improved solubility.

### Example 5: Granular Dry Laundry Detergent Compositions Containing Water Soluble Aesthetic Particles

Granular dry laundry detergent compositions designed for use in washing machines or hand washing processes are made by combining the listed ingredients in the listed proportions (weight % of active material except where noted otherwise).

| **Ingredient** | **Amount (wt%)** |
|---|---|
| **Anionic detersive surfactant** (such as alkyl benzene sulphonate, alkyl ethoxylated sulphate and mixtures thereof) | 8% to 15% |
| **Non-ionic detersive surfactant** (such as alkyl ethoxylated alcohol) | 0.5% to 4% |
| **Cationic detersive surfactant** (such as quaternary ammonium compounds) | 0% to 4% |
| **Other detersive surfactant** (such as zwitterionic detersive surfactants, amphoteric surfactants and mixtures thereof) | 0% to 4% |
| **Carboxylate polymer** (such as co-polymers of maleic acid and acrylic acid) | 1% to 4% |
| **Polyethylene glycol polymer** (such as a polyethylene glycol polymer comprising poly vinyl acetate side chains) | 0.5% to 4% |
| **Polyester soil release polymer** (such as Repel-o-tex and/or Texcare polymers) | 0.1% to 2% |
| **Cellulosic polymer** (such as carboxymethyl cellulose, methyl cellulose and combinations thereof) | 0.5% to 2% |
| **Other polymer** (such as amine polymers, dye transfer inhibitor polymers, hexamethylenediamine derivative polymers, and mixtures thereof) | 0% to 4% |
| **Zeolite builder and phosphate builder** (such as zeolite 4A and/or sodium tripolyphosphate) | 0% to 4% |
| **Other builder** (such as sodium citrate and/or citric acid) | 0% to 3% |
| **Carbonate salt** (such as sodium carbonate and/or sodium bicarbonate) | 15% to 30% |
| **Silicate salt** (such as sodium silicate) | 0% to 10% |
| **Filler** (such as sodium sulphate and/or bio-fillers) | 10% to 40% |
| **Source of available oxygen** (such as sodium percarbonate) | 10% to 20% |
| **Bleach activator** (such as tetraacetylethylene diamine (TAED) and/or nonanoyloxybenzenesulphonate (NOBS) | 2% to 8% |
| **Bleach catalyst** (such as oxaziridinium-based bleach catalyst and/or transition metal bleach catalyst) | 0% to 0.1% |
| **Other bleach** (such as reducing bleach and/or pre-formed peracid) | 0% to 10% |
| **Chelant** (such as ethylenediamine-N'N'-disuccinic acid (EDDS) and/or hydroxyethane diphosphonic acid (HEDP) | 0.2% to 1% |
| **Photobleach** (such as zinc and/or aluminium sulphonated phthalocyanine) | 0% to 0.1% |
| **Hueing agent** (such as direct violet 99, acid red 52, acid blue 80, direct violet 9, solvent violet 13 and any combination thereof) | 0% to 1% |
| **Brightener** (such as brightener 15 and/or brightener 49) | 0.1% to 0.4% |
| **Protease^{∗}** (such as Savinase^{®}, Savinase^{®} Ultra, Purafect^{®}, FN3, FN4 and any combination thereof) | 0.1% to 0.4% |
| **Amylase^{∗}** (such as Termamyl^{®}, Termamyl^{®} ultra, Natalase^{®}, Optisize, Stainzyme^{®}, Stainzyme^{®} Plus and any combination thereof) | 0.05% to 0.2% |
| **Cellulase^{∗}** (such as Carezyme^{®} and/or Celluclean^{®}) | 0.05% to 0.2% |
| **Lipase^{∗}** (such as Lipex^{®}, Lipolex^{®}, Lipoclean^{®} and any combination thereof) | 0.2% to 1% |
| **Other enzyme^{∗}** (such as xyloglucanase, cutinase, pectate lyase, mannanase, bleaching enzyme) | 0% to 2% |
| **Fabric softener** (such as montmorillonite clay and/or polydimethylsiloxane (PDMS) | 0% to 4% |
| **Flocculant** (such as polyethylene oxide) | 0% to 1% |
| **Suds suppressor** (such as silicone and/or fatty acid) | 0% to 0.1% |
| **Perfume** (such as perfume microcapsule, spray-on perfume, starch encapsulated perfume accords, perfume loaded zeolite, and any combination thereof) | 0.1% to 1% |
| **Water Soluble Aesthetic particles** (of Example 1) | 0.02% to 3% |
| **Miscellaneous** | balance |

| | |
|---|---|
| * All enzyme levels expressed as rug active enzyme protein per 100 g detergent composition. | |

Surfactant ingredients can be obtained from BASF, Ludwigshafen, Germany (Lutensol^{®}); Shell Chemicals, London, UK; Stepan, Northfield, Ill., USA; Huntsman, Huntsman, Salt Lake City, Utah, USA; Clariant, Sulzbach, Germany (Praepagen^{®}).

Sodium tripolyphosphate can be obtained from Rhodia, Paris, France.

Zeolite can be obtained from Industrial Zeolite (UK) Ltd, Grays, Essex, UK.

Citric acid and sodium citrate can be obtained from Jungbunzlauer, Basel, Switzerland.

NOBS is sodium nonanoyloxybenzenesulfonate, supplied by Eastman, Batesville, Ark., USA.

TAED is tetraacetylethylenediamine, supplied under the Peractive^{®} brand name by Clariant GmbH, Sulzbach, Germany.

Sodium carbonate and sodium bicarbonate can be obtained from Solvay, Brussels, Belgium.

Polyacrylate, polyacrylate/maleate copolymers can be obtained from BASF, Ludwigshafen, Germany.

Repel-o-tex can be obtained from Rhodia, Paris, France.

Texcare can be obtained from Clariant, Sulzbach, Germany.

Sodium percarbonate and sodium carbonate can be obtained from Solvay, Houston, Tex., U.S.A.

Na salt of Ethylenediamine-N,N'-disuccinic acid, (S,S) isomer (EDDS) can be obtained from Octel, Ellesmere Port, UK.

Hydroxyethane di phosphonate (HEDP) can be obtained from Dow Chemical, Midland, Mich., U.S.A.

Enzymes Savinase^{®}, Savinase^{®} Ultra, Stainzyme^{®} Plus, Lipex^{®}, Lipolex^{®}, Lipoclean^{®}, Celluclean^{®}, Carezyme^{®}, Natalase^{®}, Stainzyme^{®}, Stainzyme^{®} Plus, Termamyl^{®}, Termamyl^{®} ultra, and Mannaway^{®} can be obtained from Novozymes, Bagsvaerd, Denmark.

Enzymes Purafect^{®}, FN3, FN4 and Optisize can be obtained from Genencor International Inc., Palo Alto, California, US.

Direct violet 9 and 99 can be obtained from BASF DE, Ludwigshafen, Germany.

Solvent violet 13 can be obtained from Ningbo Fixing Chemical Co., Ltd. Ningbo, Zhejiang, China.

Brighteners can be obtained from Ciba Specialty Chemicals, Basel, Switzerland.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A cleaning, personal care or fabric treatment composition containing a plurality of distinct aesthetic particles (1), each distinct aesthetic particle comprising:
a first side (2),
an opposing second side (3),
at least one wall (8) separating a first void and a second void contained between the first side (2) and the second side (3),
wherein the first side (2) has a length (4) from 0.2 mm to 20 mm;
wherein the wall (8) has a width (9) ranging from 0.01 mm to 5 mm as measured in a cross sectional plane, and
wherein the first side (2) comprises a first perimeter (10) shape, wherein the first perimeter (10) shape has symmetry, and
wherein the particle is water dispersible.

2. The composition of claim 1, wherein the particle (1) has a thickness (6) defined by the distance between the first side (2) and the second side (3) of from 0.1 mm to 10 mm, preferably from 0.2 mm to 5 mm, more preferably from 0.2 mm to 2.5 mm.

3. The composition of claim 1 or claim 2 wherein the first side (2) comprises a first planar surface, the second side (3) comprises a second planar surface, and the first planar surface and the second planar surface are parallel to each other.

4. The composition of any of the preceding claims, wherein the length (4) of the first side (2) is from 1 mm to 10 mm, preferably from 2 mm to 8 mm, more preferably from 2.5 mm to 6 mm.

5. The composition of any of the preceding claims, wherein the second side (3) has a length from 0.2 mm to 20 mm, preferably from 1 mm to 10 mm, still preferably from 2 mm to 8 mm, more preferably from 2.5 mm to 6 mm, most preferably the length of the second side (3) is substantially the same as the length (4) of the first side (2).

6. The composition of any of the preceding claims, wherein the width (9) of the wall (8) is from 0.05 mm to 2 mm as measured in the cross sectional plane, more preferably from 0.1 mm to 1 mm.

7. The composition of any preceding claim, wherein the first side (2) comprises a first planar surface, wherein the cross sectional plane is parallel to the first planar surface.

8. The composition of any of the preceding claims, wherein the second side (3) has a second perimeter shape, preferably each of the first and second perimeter shape is independently selected from the group consisting of regular or irregular polygon, circle, oval, petal, heart, combinations thereof, more preferably the first perimeter shape is substantially the same as the second perimeter shape.

9. The composition of any of the preceding claims, wherein at least either the first void or the second void is a through hole (5), preferably a linear through-hold, preferably the first void and the second void are each a through hole, preferably linear through-holes, and preferably the through hole (5) has a length (7) of 0.1 mm to 9.8 mm as measured in the cross sectional plane, preferably the length (7) is from 0.5 mm to 8 mm, more preferably from 1 mm to 6 mm.

10. The composition of any of the preceding claims, wherein the particle has a mass of from 0.1 mg to 5 g, preferably from 1 mg to 1 g, preferably the particle has a mass at least 15 wt% less than the mass of a comparable particle having same size but no voids.

11. The composition of any of the preceding claims, wherein the wall (7) forms a pattern in the cross sectional plane; preferably the pattern is selected from the group consisting of text, geometrical graphic, and combination thereof.

12. The composition of any of the preceding claims, wherein the particle (1) has at least one of the following, preferably at least two of the following, more preferably at least three of the following, yet more preferably at least four of the following:
(a) Overall Material Volume of from 0.02 mm³ to 3600 mm³, preferably from 0.05 mm³ to 250 mm³, more preferably 0.12 mm³ to 64 mm³;
(b) Total Void Volume of from 0.05 mm³ to 3800 mm³;
(c) at least two voids of the particle having a combined void volume from 0.05 mm³ to 3000 mm³, preferably from 0.1 mm³ to 450 mm³, more preferably from 0.5 mm³ to 140 mm³; and
(d) Total Void Volume Percentage, relative to the Total Particle Size, of from 10 vol% to 90 vol%, preferably from 15 vol% to 75 vol%, more preferably from 20 vol% to 60 vol%.

13. The composition of any of the preceding claims, wherein the particle comprises a water-soluble matrix agent, and optionally an active agent; wherein the water-soluble matrix agent is selected from the group consisting of water-soluble hydroxyl polymers, water-soluble thermoplastic polymers, water-soluble biodegradable polymers, water-soluble non-biodegradable polymers, and combinations thereof; preferably the water-soluble matrix agent is selected from the group consisting of pullulan, hydroxypropylmethyl cellulose, hydroxyethyl cellulose, hydroxypropyl cellulose, polyvinyl pyrrolidone, carboxymethyl cellulose, sodium alginate, xanthan gum, tragacanth gum, guar gum, acacia gum, Arabic gum, polyacrylic acid, methylmethacrylate copolymer, carboxyvinyl polymer, dextrin, pectin, chitin, levan, elsinan, collagen, gelatin, zein, gluten, soy protein, casein, polyvinyl alcohol, sugar, starch, starch derivatives, hemicellulose, hemicellulose derivatives, proteins, chitosan, chitosan derivatives, polyethylene glycol, tetramethylene ether glycol, hydroxymethyl cellulose, fatty acids and combinations thereof; wherein the active agent is selected from the group consisting of: skin benefit agents, medicinal agents, lotioning agents, fabric care agents, dishwashing agents, carpet care agents, surface care agents, hair care agents, air care agents, and combinations thereof.

14. The composition of any of the preceding claims, wherein the particle (1) is a three dimensionally (3D) printed distinct aesthetic particle, more preferably the 3D printed aesthetic particle is essentially free of water.

15. The composition of any of the preceding claims, wherein the composition is a cleaning composition comprising 0.001 wt% to 10 wt%, preferably 0.01 wt% to 8 wt%, more preferably 0.02 wt% to 3 wt% of the distinct aesthetic particles according to any one of the preceding claims, preferably wherein the cleaning composition is a granular laundry detergent composition, more preferably wherein the granular laundry detergent composition further comprises a surfactant.

16. The composition of claim 15, wherein at least 1 wt%, preferably at least 5 wt%, more preferably at least 10 wt%, of the distinct aesthetic particles contained in the distinct aesthetic particle population in the composition as a whole, exhibit the same shape and preferably wherein at least 1 wt% of the distinct aesthetic particles contained in the distinct aesthetic particle population in the composition as a whole, have substantially the same length of the first side.

## Patentansprüche

1. Zusammensetzung für eine Reinigung, Körperpflege oder Textilbehandlung, enthaltend eine Vielzahl von individuellen ästhetischen Teilchen (1), jedes individuelle ästhetische Teilchen umfassend:
eine erste Seite (2),
eine gegenüberliegende zweite Seite (3),
wenigstens eine Wand (8), die einen ersten Hohlraum und einen zweiten Hohlraum, der zwischen der ersten Seite (2) und der zweiten Seite (3) enthalten ist, trennt,
wobei die erste Seite (2) eine Länge (4) von 0,2 mm bis 20 mm aufweist;
wobei die Wand (8) eine Breite (9) in einem Bereich von 0,01 mm bis 5 mm aufweist, gemessen in einer Querschnittsebene, und
wobei die erste Seite (2) eine erste Umfangs(10)-Form umfasst, wobei die erste Umfangs(10)-Form eine Symmetrie aufweist, und
wobei das Teilchen wasserdispergierbar ist.

2. Zusammensetzung nach Anspruch 1, wobei das Teilchen(1) eine Dicke (6), die durch den Abstand zwischen der ersten Seite (2) und der zweiten Seite (3) definiert ist, von 0,1 mm bis 10 mm, vorzugsweise von 0,2 mm bis 5 mm, mehr bevorzugt von 0,2 mm bis 2,5 mm aufweist.

3. Zusammensetzung nach Anspruch 1 oder 2, wobei die erste Seite (2) eine erste ebene Fläche umfasst, die zweite Seite (3) eine zweite ebene Fläche umfasst und die erste ebene Fläche und die zweite ebene Fläche parallel zueinander sind.

4. Zusammensetzung nach einem der vorstehenden Ansprüche, wobei die Länge (4) der ersten Seite (2) von 1 mm bis 10 mm, vorzugsweise von 2 mm bis 8 mm, mehr bevorzugt von 2,5 mm bis 6 mm beträgt.

5. Zusammensetzung nach einem der vorstehenden Ansprüche, wobei die zweite Seite (3) eine Länge von 0,2 mm bis 20 mm, vorzugsweise von 1 mm bis 10 mm, weiter bevorzugt von 2 mm bis 8 mm, mehr bevorzugt von 2,5 mm bis 6 mm aufweist, am meisten bevorzugt die Länge der zweiten Seite (3) im Wesentlichen gleich der Länge (4) der ersten Seite (2) ist.

6. Zusammensetzung nach einem der vorstehenden Ansprüche, wobei die Breite (9) der Wand (8), gemessen in der Querschnittsebene, von 0,05 mm bis 2 mm, mehr bevorzugt von 0,1 mm bis 1 mm beträgt.

7. Zusammensetzung nach einem der vorstehenden Ansprüche, wobei die erste Seite (2) eine erste ebene Fläche umfasst, wobei die Querschnittsebene parallel zu der ersten ebenen Fläche ist.

8. Zusammensetzung nach einem der vorstehenden Ansprüche, wobei die zweite Seite (3) eine zweite Umfangsform aufweist, vorzugsweise jede von der ersten und der zweiten Umfangsform unabhängig voneinander ausgewählt ist aus der Gruppe, bestehend aus einem regelmäßigen oder unregelmäßigen Vieleck, einem Kreis, einem Oval, einem Blatt, einem Herz, Kombinationen davon; mehr bevorzugt die erste Umfangsform im Wesentlichen gleich der zweiten Umfangsform ist.

9. Zusammensetzung nach einem der vorstehenden Ansprüche, wobei wenigstens entweder der erste Hohlraum oder der zweite Hohlraum ein Durchgangsloch (5), vorzugsweise ein lineares Durchgangsloch, ist, vorzugsweise der erste Hohlraum und der zweite Hohlraum jeweils ein Durchgangsloch sind, vorzugsweise lineare Durchgangslöcher, und vorzugsweise das Durchgangsloch (5) eine Länge (7) von 0,1 mm bis 9,8 mm aufweist, gemessen in der Querschnittsebene; vorzugsweise die Länge (7) von 0,5 mm bis 8 mm, mehr bevorzugt von 1 mm bis 6 mm beträgt.

10. Zusammensetzung nach einem der vorstehenden Ansprüche, wobei das Teilchen eine Masse von 0,1 mg bis 5 g, vorzugsweise von 1 mg bis 1 g, aufweist, wobei das Teilchen vorzugsweise eine Masse von wenigstens zu 15 Gew.-% weniger als die Masse eines vergleichbaren Teilchens aufweist, das die gleiche Größe aufweist, aber ohne Hohlräume.

11. Zusammensetzung nach einem der vorstehenden Ansprüche, wobei die Wand (7) ein Muster in der Querschnittsebene bildet; vorzugsweise das Muster aus der Gruppe ausgewählt ist, bestehend aus Text, geometrischer Grafik und Kombination davon.

12. Zusammensetzung nach einem der vorstehenden Ansprüche, wobei das Teilchen (1) wenigstens eines der Folgenden, vorzugsweise wenigstens zwei der Folgenden, mehr bevorzugt wenigstens drei der Folgenden, noch mehr bevorzugt wenigstens vier der Folgenden aufweist:
(a) Gesamtmaterialvolumen von 0,02 mm³ bis 3600 mm³, vorzugsweise von 0,05 mm³ bis 250 mm³, mehr bevorzugt 0,12 mm³ bis 64 mm³;
(b) Gesamthohlraumvolumen von 0,05 mm³ bis 3800 mm³;
(c) wenigstens zwei Hohlräume des Teilchens, die ein kombiniertes Hohlraumvolumen von 0,05 mm³ bis 3000 mm³, vorzugsweise von 0,1 mm³ bis 450 mm³, mehr bevorzugt von 0,5 mm³ bis 140 mm³ aufweisen; und
(d) Gesamthohlraumvolumenprozentsatz, bezogen auf die Gesamtteilchengröße, von 10 Vol.-% bis 90 Vol.-%, vorzugsweise von 15 Vol.-% bis 75 Vol.-%, mehr bevorzugt von 20 Vol.-% bis 60 Vol.-%.

13. Zusammensetzung nach einem der vorstehenden Ansprüche, wobei das Teilchen ein wasserlösliches Matrixmittel und wahlweise ein wirksames Mittel umfasst; wobei das wasserlösliche Matrixmittel ausgewählt ist aus der Gruppe, bestehend aus wasserlöslichen Hydroxylpolymeren, wasserlöslichen thermoplastischen Polymeren, wasserlöslichen biologisch abbaubaren Polymeren, wasserlöslichen nicht biologisch abbaubaren Polymeren und Kombinationen davon; vorzugsweise das wasserlösliche Matrixmittel ausgewählt ist aus der Gruppe, bestehend aus Pullulan, Hydroxypropylmethylcellulose, Hydroxyethylcellulose, Hydroxypropylcellulose, Polyvinylpyrrolidon, Carboxymethylcellulose, Natriumalginat, Xanthangummi, Tragantgummi, Guargummi, Akaziengummi, Gummiarabikum, Polyacrylsäure, Methylmethacrylat-Copolymer, Carboxyvinylpolymer, Dextrin, Pektin, Chitin, Levan, Elsinan, Kollagen, Gelatine, Zein, Gluten, Sojaprotein, Casein, Polyvinylalkohol, Zucker, Stärke, Stärkederivaten, Hemicellulose, Hemicellulosederivativen, Proteinen, Chitosan, Chitosanderivaten, Polyethylenglykol, Tetramethylenetherglykol, Hydroxymethylcellulose, Fettsäuren und Kombinationen davon; wobei das wirksame Mittel ausgewählt ist aus der Gruppe, bestehend aus Hautnutzwirkungsmitteln, medizinischen Mitteln, Lotion-Mitteln, Textilpflegemitteln, Geschirrspülmitteln, Teppichpflegemitteln, Flächenpflegemitteln, Haarpflegemitteln, Luftpflegemitteln, und Kombinationen davon.

14. Zusammensetzung nach einem der vorstehenden Ansprüche, wobei das Teilchen (1) ein dreidimensional (3D) gedrucktes, individuelles ästhetisches Teilchen ist, mehr bevorzugt das 3D-gedruckte, ästhetische Teilchen im Wesentlichen frei von Wasser ist.

15. Zusammensetzung nach einem der vorstehenden Ansprüche, wobei die Zusammensetzung eine Reinigungszusammensetzung ist, umfassend zu 0,001 Gew.-% bis 10 Gew.-%, vorzugsweise zu 0,01 Gew.-% bis 8 Gew.-%, mehr bevorzugt zu 0,02 Gew.-% bis 3 Gew.-% die individuellen ästhetischen Teilchen nach einem der vorstehenden Ansprüche, vorzugsweise wobei die Reinigungszusammensetzung eine granulöse Wäschewaschmittelzusammensetzung ist, mehr bevorzugt wobei die granulöse Wäschewaschmittelzusammensetzung ferner ein Tensid umfasst.

16. Zusammensetzung nach Anspruch 15, wobei wenigstens zu 1 Gew.-%, vorzugsweise wenigstens zu 5 Gew.-%, mehr bevorzugt wenigstens zu 10 Gew.-%, die individuellen ästhetischen Teilchen, die in der Population individueller ästhetischer Teilchen in der Zusammensetzung als ein Ganzes enthalten sind, die gleiche Form zeigen und vorzugsweise wobei wenigstens zu 1 Gew.-% die individuellen ästhetischen Teilchen, die in der Population individueller ästhetischer Teilchen in der Zusammensetzung als ein Ganzes enthalten sind, im Wesentlichen die gleiche Länge der ersten Seite aufweisen.

## Revendications

1. Composition de nettoyage, de soins personnels ou de traitement de tissus contenant une pluralité de particules esthétiques distinctes (1), chaque particule esthétique distincte comprenant :
un premier côté (2),
un second côté opposé (3),
au moins une paroi (8) séparant un premier vide et un second vide contenu entre le premier côté (2) et le second côté (3),
dans laquelle le premier côté (2) a une longueur (4) allant de 0,2 mm à 20 mm ;
dans laquelle la paroi (8) a une largeur (9) allant de 0,01 mm à 5 mm telle que mesurée dans un plan en coupe transversale, et
dans laquelle le premier côté (2) comprend une première forme de périmètre (10), dans laquelle la première forme de périmètre (10) a une symétrie, et
dans laquelle la particule est hydrodispersable.

2. Composition selon la revendication 1, dans laquelle la particule (1) a une épaisseur (6) définie par la distance entre le premier côté (2) et le second côté (3) allant de 0,1 mm à 10 mm, de préférence de 0,2 mm à 5 mm, plus préférablement de 0,2 mm à 2,5 mm.

3. Composition selon la revendication 1 ou la revendication 2, dans laquelle le premier côté (2) comprend une première surface plane, le second côté (3) comprend une seconde surface plane, et la première surface plane et la seconde surface plane sont parallèles l'une à l'autre.

4. Composition selon l'une quelconque des revendications précédentes, dans laquelle la longueur (4) du premier côté (2) va de 1 mm à 10 mm, de préférence de 2 mm à 8 mm, plus préférablement de 2,5 mm à 6 mm.

5. Composition selon l'une quelconque des revendications précédentes, dans laquelle le second côté (3) a une longueur allant de 0,2 mm à 20 mm, de préférence de 1 mm à 10 mm, toujours de préférence de 2 mm à 8 mm, plus préférablement de 2,5 mm à 6 mm, le plus préférablement la longueur du second côté (3) est sensiblement identique à la longueur (4) du premier côté (2).

6. Composition selon l'une quelconque des revendications précédentes, dans laquelle la largeur (9) de la paroi (8) va de 0,05 mm à 2 mm telle que mesurée dans le plan en coupe transversale, plus préférablement de 0,1 mm à 1 mm.

7. Composition selon une quelconque revendication précédente, dans laquelle le premier côté (2) comprend une première surface plane, dans laquelle le plan en coupe transversale est parallèle à la première surface plane.

8. Composition selon l'une quelconque des revendications précédentes, dans laquelle le second côté (3) a une seconde forme de périmètre, de préférence chacune parmi la première et la seconde forme de périmètre est indépendamment choisie dans le groupe constitué d'un polygone régulier ou irrégulier, un cercle, un ovale, un pétale, un coeur, des combinaisons de ceux-ci, plus préférablement la première forme de périmètre est sensiblement identique à la seconde forme de périmètre.

9. Composition selon l'une quelconque des revendications précédentes, dans laquelle au moins soit le premier vide soit le second vide est un trou traversant (5), de préférence un orifice traversant linéaire, de préférence le premier vide et le second vide sont chacun un trou traversant, de préférence des trous traversants linéaires, et de préférence le trou traversant (5) a une longueur (7) de 0,1 mm à 9,8 mm telle que mesurée dans le plan de coupe transversale, de préférence la longueur (7) va de 0,5 mm à 8 mm, plus préférablement de 1 mm à 6 mm.

10. Composition selon l'une quelconque des revendications précédentes, dans laquelle la particule a une masse allant de 0,1 mg à 5 g, de préférence de 1 mg à 1 g, de préférence la particule a une masse au moins 15 % en poids inférieure à la masse d'une particule comparable ayant la même taille mais pas de vides.

11. Composition selon l'une quelconque des revendications précédentes, dans laquelle la paroi (7) forme un motif dans le plan de coupe transversale ; de préférence le motif est choisi dans le groupe constitué de texte, graphique géométrique, et combinaison de ceux-ci.

12. Composition selon l'une quelconque des revendications précédentes, dans laquelle la particule (1) a au moins l'un des éléments suivants, de préférence au moins deux des éléments suivants, plus préférablement au moins trois des éléments suivants, encore plus préférablement au moins quatre des éléments suivants :
(a) Volume de matériau global de 0,02 mm³à 3600 mm³, de préférence de 0,05 mm³ à 250 mm³, plus préférablement 0,12 mm³ à 64 mm³ ;
(b) Volume de vide total de 0,05 mm³ à 3800 mm³ ;
(c) au moins deux vides de la particule ayant un volume de vide combiné de 0,05 mm³ à 3000 mm³, de préférence de 0,1 mm³ à 450 mm³, plus préférablement de 0,5 mm³ à 140 mm³ ; et
(d) Pourcentage total de volume de vide, par rapport à la taille totale de particules, allant de 10 % en volume à 90 % en volume, de préférence de 15 % en volume à 75 % en volume, plus préférablement de 20 % en volume à 60 % en volume.

13. Composition selon l'une quelconque des revendications précédentes, dans laquelle la particule comprend un agent de matrice hydrosoluble, et facultativement un agent actif ; dans laquelle l'agent de matrice hydrosoluble est choisi dans le groupe constitué de polymères hydroxyle hydrosolubles, polymères thermoplastiques hydrosolubles, polymères biodégradables hydrosolubles, polymères non biodégradables hydrosolubles, et leurs combinaisons ; de préférence, l'agent de matrice hydrosoluble est choisi dans le groupe constitué par pullulane, hydroxypropylméthyl-cellulose, hydroxyéthylcellulose, hydroxypropylcellulose, polyvinylpyrrolidone, carboxyméthylcellulose, alginate de sodium, gomme de xanthane, gomme de tragacanthe, gomme guar, gomme d'acacia, gomme arabique, acide polyacrylique, copolymère de méthacrylate de méthyle, polymère carboxyvinyle, dextrine, pectine, chitine, lévane, elsinane, collagène, gélatine, zéine, gluten, protéine de soja, caséine, alcool polyvinylique, sucre, amidon, dérivés d'amidon, hémicellulose, dérivés d'hémicellulose, protéines, chitosan, dérivés de chitosan, polyéthylène glycol, tétraméthylène éther glycol, hydroxyméthylcellulose, acides gras et leurs combinaisons ; dans laquelle l'agent actif est choisi dans le groupe constitué de : agents de soin cutané, agents médicinaux, agents de lotions, agents pour le soin des tissus, agents pour le lavage de la vaisselle, agents pour le soin des tapis, agents pour le soin des surfaces, agents de soin capillaire, agents pour le soin de l'air et leurs combinaisons.

14. Composition selon l'une quelconque des revendications précédentes, dans laquelle la particule (1) est une particule esthétique distincte imprimée en trois dimensions (3D), plus préférablement la particule esthétique imprimée en 3D est pratiquement exempte d'eau.

15. Composition selon l'une quelconque des revendications précédentes, dans laquelle la composition est une composition nettoyante comprenant 0,001 % en poids à 10 % en poids, de préférence 0,01 % en poids à 8 % en poids, plus préférablement 0,02 % en poids à 3 % en poids des particules esthétiques distinctes selon l'une quelconque des revendications précédentes, de préférence dans laquelle la composition nettoyante est une composition détergente granulaire pour le lavage du linge, plus préférablement dans laquelle la composition détergente granulaire pour le lavage du linge comprend en outre un tensioactif.

16. Composition selon la revendication 15, dans laquelle au moins 1 % en poids, de préférence au moins 5 % en poids, plus préférablement au moins 10 % en poids, des particules esthétiques distinctes contenues dans la population de particules esthétiques distinctes dans la composition dans son ensemble, présentent la même forme et de préférence dans laquelle au moins 1 % en poids des particules esthétiques distinctes contenues dans la population de particules esthétiques distinctes dans la composition dans son ensemble, ont sensiblement la même longueur du premier côté.
